# EUROPÄISCHE PATENTSCHRIFT

(11) **EP 0 557 865 B1**
(45) Veröffentlichungstag und Bekanntmachung des Hinweises auf die Patenterteilung: **26.04.1995**
(21) Anmeldenummer: 93102404.6
(22) Anmeldetag: 16.02.1993
(51) Int. Cl.: B60R 22/28, B60R 22/46, F16F 7/12

(54) **Energiewandler in einem Rückhaltesystem für Fahrzeuginsassen**
Energy converter in a vehicle occupant restraint system
Convertisseur d'énergie dans un système de retenue pour occupants de véhicule

(30) Priorität: 27.02.1992 DE 4206117
(43) Veröffentlichungstag der Anmeldung: 01.09.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 422 408
- DE-A- 2 349 891
- FR-A- 2 219 867
- FR-A- 2 494 997
- GB-A- 2 011 019

## Beschreibung

Die Erfindung betrifft einen Energiewandler in einem Rückhaltesystem für Fahrzeuginsassen, mit einem rohrförmigen Wandlerkörper, der aus plastisch verformbarem Material besteht und im unverformten Zustand eine kreisrunde Querschnittsform aufweist, sowie mit Deformationsgliedern, die aufgegenüberliegenden Seiten der Achse des rohrförmigen Wandlerkörpers angeordnet und jeweils auf ihrer von der Wandung des Wandlerkörpers abgewandten Seite auf einer Rampenfläche eines Kolbenelements abgestützt sind, an dem ein Zug- oder Schubmittel zur Verschiebung der Deformationsglieder angreift, so daß die Deformationsglieder in dem Wandlerkörper in einer bestimmten Richtung mit der Wandung des Wandlerkörpers in Eingriff gelangen und bei weiterer Verschiebung die Wandung verformen.

Ein solcher Energiewandler hat die Aufgabe, Belastungsspitzen in einem Sicherheitsgurtsystem während der Vorwärtsverlagerung eines Fahrzeuginsassen bei einem Fahrzeugaufprall abzubauen. Besonders wirksam ist der Einsatz eines solchen Energiewandlers in Kombination mit einem Gurtstraffer, der die Gurtlose beseitigt, bevor die Vorverlagerung des Fahrzeuginsassen beginnt. Es steht dann für die Vorverlagerung des Fahrzeuginsassen und die gleichzeitig erfolgende Energiewandlung eine ausreichende Bewegungsstrecke zur Verfügung.

Bei einem aus der DE-A-23 49 891 bekannten Energiewandler der eingangs genannten Art enthält das Kolbenelement einen kegeligen Abschnitt, an den sich ein zylindrischer Abschnitt anschließt. Die Deformationsglieder sind durch einen Kranz von Kugeln gebildet, die in einem Kugelkäfig zusammengefaßt sind, der in dem zwischen dem rohrförmigen Wandlerkörper und dem kegeligen bzw. zylindrischen Abschnitt des Kolbenelements verbleibenden Raum aufgenommen ist. Die Kugeln sind gleichmäßig über den Innenumfang des Wandlerkörpers verteilt.

In der GB-A-2 011 019 ist ein Energiewandler beschrieben, bei dem innerhalb eines rohrförmigen Wandlerkörpers mehrere walzenartige, sich quer zur Wandlerachse erstreckende Deformationsglieder angeordnet sind. Hierbei sind die Deformationsglieder im Längsschnitt an den Verlauf der Innenwand des im Querschnitt kreisrunden Wandlerkörpers angepaßt.

Ein in der EP 0 422 410 A1 beschriebener Energiewandler oder Kraftbegrenzer besteht aus einem Zylinder aus plastisch verformbarem Material, worin eine Stange aufgenommen ist, die an ihrem einen Ende aus dem Zylinder herausragt und an ihrem anderen Ende einen Freiraum abgrenzt, in dem mehrere Wälzkörper aufgenommen sind. Der Außendurchmesser der durch die Wälzkörper gebildeten Ringanordnung ist größer als der Innendurchmesser der Zylinderbohrung. Unter hoher Zuglast zwischen Zylinder und Stange dringen die Wälzkörper in das Material der Zylinderwandung ein, wobei unter Bildung von Längsrillen Verformungsarbeit geleistet wird, durch die ein hoher Energiebetrag umgesetzt wird und Belastungsspitzen im Gurtsystem abgebaut werden.

Die mit einem solchen Energiewandler erreichbare Begrenzung der im Gurtsystem auftretenden Lastspitzen trägt wesentlich zur Minderung des Verletzungsrisikos bei, was anhand von Belastungsmessungen an sogenannten Dummies nachgewiesen werden kann. Es wurde jedoch festgestellt, daß die Belastungsspitzen im Gurtsystem durch einen solchen Energiewandler zwar begrenzt, jedoch nicht vermieden werden können.

Der Erfindung liegt die Aufgabe zugrunde, einen Energiewandler der eingangs angegebenen Art dahingehend zu verbessern, daß die Belastungsspitzen im Gurtsystem weiter reduziert und nahezu beseitigt werden, so daß eine nahezu konstante oder in einem gewünschten Maße stetig ansteigende Last im Gurtsystem auftritt.

Zur Lösung dieser Aufgabe wird erfindungsgemäß vorgeschlagen, daß zwei Deformationsglieder vorgesehen sind, daß die Deformationsglieder als zylindrische Walzen ausgebildet sind, und daß die beiden zylindrischen Walzen auf zwei einander symmetrisch gegenüberliegenden Seiten mit ihren Achsen senkrecht zu der Achse des rohrförmigen Wandlerkörpers angeordnet sind, so daß die Walzen bei der weiteren Verschiebung dessen Wandung plastisch verformen. Die erfindungsgemäße Ausführung des Energiewandlers ist insbesondere für eine Kraftbegrenzung auf einem Niveau innerhalb eines Bereiches von etwa 5.000 bis 12.000 N ausgelegt. Kräfte in diesem Bereich treten am Gurtschloß auf; da am Gurtschloß Kräfte über zwei Gurtbandabschnitte eingeleitet werden, nämlich Schultergurt und Beckengurt, ist dort das Kraftniveau doppelt so hoch wie beispielsweise in dem Gurtbandabschnitt zwischen Umlenkbeschlag und Gurtaufroller. Der Energiewandler nach der vorliegenden Erfindung ist daher besonders für den Einsatz im Bereich zwischen dem Gurtschloß und seiner Verankerung am Fahrzeug bestimmt.

Die Erfindung beruht auf der Erkenntnis, daß zur Vermeidung von Lastspitzen im Gurtsystem gewährleistet sein muß, daß die Energiewandlung durch plastische Verformung des Materials des Wandlerkörpers stetig und ruckfrei erfolgt. Um dies zu erreichen, ist es günstig, wenn die Deformationsglieder deutlich tiefer als die Wälzkörper der bekannten Energiewandler in das Material des Wandlerkörpers eindringen. Es wird dann vermieden, daß die Wandung des Wandlerkörpers zunächst elastisch nachgibt und dann annähernd polygonförmig verformt wird, bevor die Deformationsglieder in das Material der Wandung des Wandlerkörpers eindringen. Es wurde gefunden, daß abrupte Schwankungen des wegabhängigen Kraftverlaufs weitgehend vermieden werden, wenn überwiegend eine plastische Verformung der Wandung des rohrförmigen Wandlerkörpers auftritt und elastische Verformungen weitgehend unterbunden werden.

Verschiedene Weiterbildungen und Ausführungsformen sind in den Unteransprüchen angegeben.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: einen schematischen Teil-Längsschnitt einer ersten Ausführungsform des Energiewandlers;
- Fig. 2: einen Querschnitt des in Fig. 1 gezeigten Energiewandlers nach erfolgter plastischer Verformung des rohrförmigen Wandlerkörpers;
- Fig. 2a: eine schematische Perspektivansicht einer Platte bei der in den Figuren 1 und 2 gezeigten Ausführungsform des Energiewandlers;
- Fig. 3a bis 3c: drei Ausführungsformen des Energiewandlers mit verschiedener Ausbildung des rohrförmigen Wandlerkörpers; und
- Fig. 4a bis 4c: Diagramme, die für die Ausführungsformen nach den Figuren 3a bis 3c den Verlauf der Kraft in Abhängigkeit von der Wegstrecke zeigen.

In einem rohrförmigen Wandlerkörper 10 von kreisrundem Querschnitt ist auf einem Zugseil 12 eine Verformungseinrichtung angeordnet, die zwei auf dem Zugseil 12 hintereinander befestigte Kolbenelemente 14, 16 und zwei Walzen 18 umfaßt, die auf zwei einander symmetrisch gegenüberliegenden Rampenflächen 20 des Kolbenteils 14 aufliegen und an einer Platte 22 aus elastischem Material in einer Ruhestellung am Grund der Rampenflächen 20 anliegen, wobei sie an ihren axialen Stirnenden mit der Innenseite der Wandung des rohrförmigen Wandlerkörpers 10 in Berührung kommen. Die Kolbenelemente 14, 16 sind in dem rohrförmigen Wandlerkörper 10 verschiebbar.

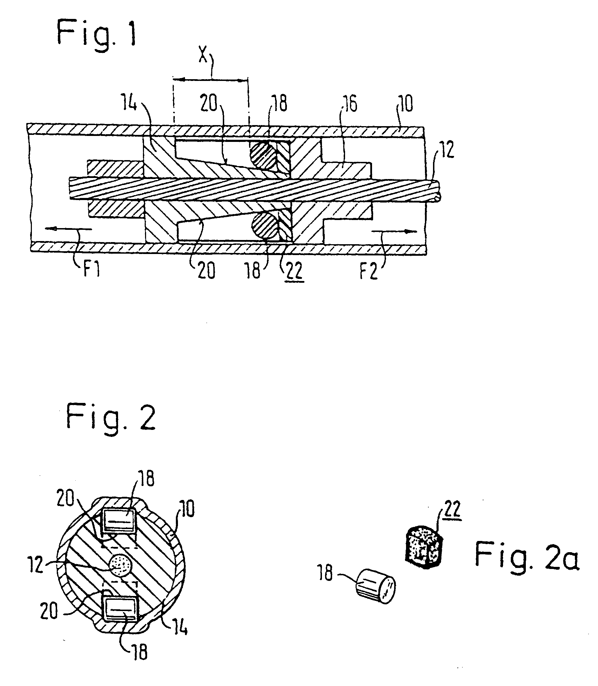

In einem Sicherheitsgurtsystem wird der rohrförmige Wandlerkörper 10 beispielsweise am Fahrzeug verankert, und an dem Zugseil 12 wird das Gurtschloß angeschlossen. Die in Fig. 1 gezeigte Kolben/Zylinder-Einrichtung kann zugleich den Linearantrieb eines am Gurtschloß angreifenden Gurtstraffers bilden. Bei einer solchen Ausführung wird das Kolbenelement 16 in dem durch den rohrförmigen Wandlerkörper 10 gebildeten Zylinder mit dem Druck der durch einen pyrotechnischen Gasgenerator erzeugten Gase beaufschlagt, so daß die Kolbenelemente 14, 16 in Fig. 1 in Richtung eines Pfeils F1 im Inneren des rohrförmigen Wandlerkörpers 10 verschoben werden, wobei das Zugseil 12 und folglich das daran angeschlossene Gurtschloß mitgenommen werden. Nach erfolgter Gurtstraffung beginnt die Vorverlagerung des durch das Gurtsystem gesicherten Fahrzeuginsassen, wobei ein Zug über das Zugseil 12 in Richtung des Pfeils F2 in Fig. 1 auf die Kolbenelemente 14, 16 ausgeübt wird. Die Walzen 18, die eine freie Bewegung der Kolbenelemente 14, 16 in Richtung des Pfeiles F1 zulassen, werden durch die Platte 22 elastisch in Anlage an der Innenseite der Wandung des rohrförmigen Wandlerkörpers 10 gehalten und geraten nun mit dieser Wandung in Eingriff, wenn die Bewegung in Richtung des Pfeiles F2 stattfindet, denn sie werden durch die Rampenflächen 20 radial auswärts gedrückt. Sie dringen nun stetig zunehmend in das Material der Wandung des rohrförmigen Wandlerkörpers 10 ein, was zu einer plastischen Verformung dieser Wandung führt. Dieser Zustand einer plastischen Verformung ist in Fig. 2 dargestellt.

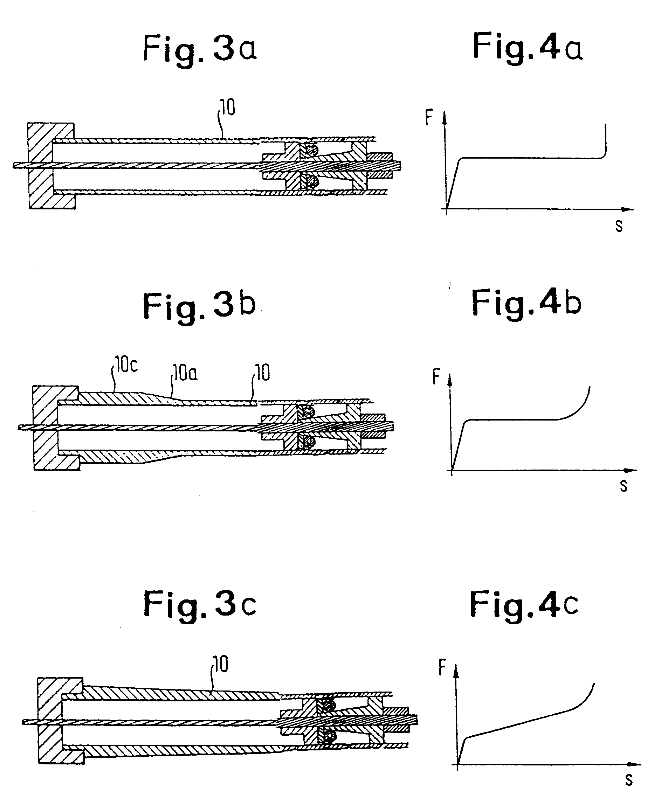

Wenn die Wandstärke des rohrförmigen Wandlerkörpers 10 konstant ist, wie in Fig. 3a dargestellt, tritt der im Diagramm der Fig. 4a gezeigte Verlauf der Kraft F in Abhängigkeit von der Wegstrecke s auf. Die Kraft F ist diejenige, die bei der Verschiebung der Kolbenelemente 14, 16 mit den Walzen 18 in dem rohrförmigen Wandlerkörper 10 aufgebracht werden muß, und die Wegstrecke s ist die der Verschiebung dieser Kolbenelemente mit den Walzen 18 im Inneren des Wandlerkörpers. Wie aus Fig. 4a ersichtlich ist, nimmt die Kraft F von Null ausgehend stetig bis zu einem maximalen Wert zu, der bereits nach einem Bruchteil der gesamten zur Verfügung stehenden Wegstrecke erreicht ist. Besonders beachtenswert ist, daß der Verlauf der Kraft F von Spitzen und Einbrüchen weitgehend frei ist. Hierin unterscheidet sich der erfindungsgemäße Energiewandler ganz erheblich vom Stand der Technik mit einer Vielzahl von einzelnen Deformationsgliedern, beispielsweise Kugeln, die nur wenig in das Material des Wandlerkörpers eindringen. Bei der in Fig. 3a gezeigten Ausführungsform mit konstanter Wandstärke des Wandlerkörpers 10 bleibt die Kraft F anschließend nahezu konstant, bis der Endanschlag des Wandlerkörpers erreicht ist.

Bei der in Fig. 3b gezeigten Ausführungsform ist die Wandstärke des Wandlerkörpers 10 über etwa die Hälfte seiner Länge konstant und nimmt dann auf einem Abschnitt 10a stetig auf etwa den doppelten Wert zu, um anschließend in einem Abschnitt 10c konstant zu bleiben. Fig. 4b zeigt den zugehörigen Verlauf der Kraft F in Abhängigkeit von der Wegstrecke s. Im Unterschied zu Fig. 4a nimmt die Kraft F nach Durchlaufen etwa der halben Wegstrecke s zu und erreicht kurz vor dem Ende des Wandlerkörpers ihren Höchstwert.

Bei der Ausführungsform nach Fig. 3c nimmt die Wandstärke des Wandlerkörpers 10 von dessen Anfang zu dessen Ende stetig zu. Fig. 4c zeigt den zugehörigen Verlauf der Kraft F in Abhängigkeit von der Wegstrecke s. Man sieht, daß die Kraft F anfangs relativ steil und dann progressiv zunimmt, um allmählich in einen Höchstwert im Bereich des Anschlags am Ende des Wandlerkörpers 10 überzugehen.

Durch geeignete Bemessung der Wandstärke des Wandlerkörpers über seine Länge kann nahezu jeder gewünschte und für einen bestimmten Anwendungsfall geeignete Verlauf der Kraft F in Abhängigkeit von der Wegstrecke s erreicht werden. Bei allen Ausführungen zeigt sich, daß der Kraftverlauf völlig frei von größeren Spitzen oder Einbrüchen ist, wodurch das Verletzungsrisiko ganz entscheidend vermindert wird.

Fig. 2a zeigt die Platte 22 und eine Walze 18, die beide auf der Rampenfläche 20 angeordnet sind. Eine Grundfläche einer in das Kolbenelement 14 eingeformten Nut bildet die Rampenfläche 20. Durch die Seitenwände der Nut wird jede Walze 18 in einer günstigen, mittigen Ruhestellung für den Beginn der Verformungsarbeit gehalten. Zur Vermeidung von Belastungsspitzen ist es nämlich wichtig, daß die Walzen 18 gleichmäßig und stetig an der Innenseite des rohrförmigen Wandlerkörpers 10 in Eingriff gebracht werden.

Eine weitere Optimierung wird dadurch erreicht, daß die Walzen 18 an ihren axialen Stirnenden mit einem gerundeten Übergang zur Mantelfläche versehen sind. Der Rundungsradius beträgt je nach Material und Größe des Wandlerkörpers 10 etwa 0,7 bis 0,9 mm, vorzugsweise 0,8 mm. Durch diese Verrundung wird erreicht, daß die Walzen 18 mit ihren Enden zunächst sanft an der Innenseite des Wandlerkörpers 10 in Eingriff gelangen, statt schneidend oder spanabhebend in das Material des Wandlerkörpers 10 einzudringen.

## Patentansprüche

1. Energiewandler in einem Rückhaltesystem für Fahrzeuginsassen, mit einem rohrförmigen Wandlerkörper (10), der aus plastisch verformbarem Material besteht und im unverformten Zustand eine kreisrunde Querschnittsform aufweist, sowie mit Deformationsgliedern (18), die auf gegenüberliegenden Seiten der Achse des rohrförmigen Wandlerkörpers (10) angeordnet und jeweils auf ihrer von der Wandung des Wandlerkörpers abgewandten Seite auf einer Rampenfläche (20) eines Kolbenelements (14) abgestützt sind, an dem ein Zug- oder Schubmittel (12) zur Verschiebung der Deformationsglieder (18) angreift, so daß die Deformationsglieder (18) in dem Wandlerkörper (10) in einer bestimmten Richtung (F2) mit der Wandung des Wandlerkörpers (10) in Eingriff gelangen und bei weiterer Verschiebung die Wandung verformen, dadurch gekennzeichnet, daß zwei Deformationsglieder vorgesehen sind, daß die Deformationsglieder als zylindrische Walzen (18) ausgebildet sind und daß die beiden zylindrischen Walzen (18) auf zwei einander symmetrisch gegenüberliegenden Seiten mit ihren Achsen senkrecht zu der Achse des rohrförmigen Wandlerkörpers (10) angeordnet sind, so daß die Walzen (18) bei der weiteren Verschiebung dessen Wandung plastisch verformen.

2. Energiewandler nach Anspruch 1, dadurch gekennzeichnet, daß jede der Walzen (18) an einer Platte (22) aus elastischem Material in einer Ruhestellung am Grund der Rampenfläche (20) und an ihren axialen Enden in Berührung mit der Wandung des Wandlerkörpers (10) gehalten ist.

3. Energiewandler nach Anspruch 2, dadurch gekennzeichnet, daß die Rampenfläche (20) durch eine Grundfläche einer in das Kolbenelement (14) eingeformten Nut gebildet wird und die Seitenflächen der Nut die axialen Stirnflächen der Walzen (18) in einer Richtung quer zur Achse des rohrförmigen Wandlerkörpers (10) führen.

4. Energiewandler nach einem der Ansprüche 1 bis 3, dadurch gekennzeichnet, daß die Walzen (18) an ihren axialen Enden einen verrundeten Übergang von ihrer Mantelfläche zu ihrer Stirnfläche aufweisen und der Radius des verrundeten Übergangs zwischen etwa 0,5 und 1 mm, vorzugsweise 0,7 bis 0,9 mm beträgt.

5. Energiewandler nach einem der vorstehenden Ansprüche dadurch gekennzeichnet, daß der rohrförmige Wandlerkörper (10) durch den Zylinder eines pyrotechnischen Kolben/Zylinder-Linearantriebs eines Gurtstraffers gebildet und die Verformungseinrichtung an dem Kolben dieses Linearantriebs angeordnet ist, wobei die Richtung (F1) der Bewegung des Kolbens (14) bei Aktivierung des Linearantriebs entgegengesetzt zu der bestimmten Richtung (F2) ist.

6. Energiewandler nach einem der vorstehenden Ansprüche, dadurch gekennzeichnet, daß die Wandstärke des rohrförmigen Wandlerkörpers (10) in der bestimmten Richtung (F2) in einem Maße ansteigt, das durch einen vordefinierten Verlauf der über das Zug- oder Schubmittel (12) einzuleitenden Kräfte (F) in Abhängigkeit von der Bewegungsstrecke (s) der Walzen (18) im Inneren des Wandlerkörpers (10) bestimmt ist.

7. Energiewandler nach einem der vorstehenden Ansprüche, dadurch gekennzeichnet, daß er für bei der Verschiebung der Walzen (18) in dem rohrförmigen Wandlerkörper (10) auftretende Kräfte (F) in einem Bereich von etwa 5.000 N bis etwa 12.000 N dimensioniert und insbesondere für die Verwendung zwischen dem Gurtschloß und dessen Verankerungsstelle am Fahrzeug vorgesehen ist.

## Claims

1. Energy converter in a restraining system for vehicle occupants, comprising a tubular converter body (10) of plastically deformable material having, in the undeformed state, a circular crosssectional form, and two deformation members (18) disposed on opposite sides of the axis of the tubular converter body (10) and each supported on their side remote from the wall of the converter body on a ramp face (20) of a piston element (14) at which a pulling or thrust means (12) engages for displacement of the deformation members (18) so that the deformation members (18) in the converter body (10) come into engagement with the wall of the converter body (10) in a predetermined direction (F2) and on further displacement deform the wall, characterized in that two deformation members are provided, that the deformation members are designed as cylindrical rollers (18) and that the two cylindrical rollers (18) are disposed on two symmetrically opposite sides with their axes arranged perpendicular to the axis of the tubular converter body (10) so that the rollers (18) on further displacement deform the wall of the converter body plastically.

2. Energy converter according to claim 1, characterized in that each of the rollers (18) are held by a plate (22) of resilient material in a rest position at the bottom of the ramp face (20) and at their axial ends in contact with the wall of the converter body (10).

3. Energy converter according to claim 2, characterized in that the ramp face (20) is formed by a base surface of a groove recessed in the piston element (14) and that the axial end faces of the rollers (18) are guided by the side walls of the groove in a direction transversely of the axis of the tubular converter body (10).

4. Energy converter according to any one of claims 1 to 3, characterized in that the rollers (18) comprise at their axial ends a rounded transition from their outer surfaces to their end face and the radius of the rounded transition is between about 0.5 and 1 mm, preferably 0.7 to 0.9 mm.

5. Energy converter according to any one of the preceding claims, characterized in that the tubular converter body (10) is formed by the cylinder of a pyrotechnical piston/cylinder linear drive of a belt pretensioner and the deforming means is arranged on the piston of said linear drive, the direction (F1) of the movement of the piston (14) on activation of the linear drive being opposite to the predetermined direction (F2).

6. Energy converter according to any one of the preceding claims, characterized in that the wall thickness of the tubular converter body (10) rises in the predetermined direction (F2) to an extent which is governed by a predefined profile of the forces (F) to be introduced via the pulling or thrust means (12) as a function of the travel path (s) of the rollers (18) in the interior of the converter body (10).

7. Energy converter according to any one of the preceding claims, characterized in that it is dimensioned for forces (F) occurring on displacement of the rollers (18) in the tubular converter body (10) in a range from about 5,000 N to about 12,000 N and in particular provided for use between the buckle and the anchoring point thereof to the vehicle.

## Revendications

1. Convertisseur d'énergie dans un système de retenue pour occupants d'un véhicule, comprenant un corps tubulaire (10) de convertisseur en matière déformable plastiquement présentant, à l'état non déformé, une section circulaire, et des corps de déformation (18) qui sont disposés sur deux côtés opposés par rapport à l'axe du corps tubulaire (10) convertisseur et dont chacun prend appui du coté opposé à celui de la paroi du corps du convertisseur sur une surface en rampe (20) d'un élément de piston (14) qu'attaque un organe de traction ou de poussée (12) pour le déplacement des corps de déformation (18), de manière que les corps de déformation (18) parviennent, à l'intérieur du corps (10) du convertisseur, en prise dans un sens déterminé (F2) avec la paroi du corps (10) du convertisseur et déforment plastiquement la paroi lors de la poursuite de leur déplacement, caractérisé en ce que deux corps de déformation (18) sont prévus qui sont conformés chacun en rouleau cylindrique, en ce que les rouleaux cylindriques (18) sont agencés sur deux côtés symétriquement opposés avec leur axe perpendiculaire à l'axe du corps tubulaire convertisseur (10), de façon telle que les rouleaux (18) déforment plastiquement la paroi de celui-ci lors de la poursuite de leur avancement.

2. Convertisseur d'énergie selon la revendication 1, caractérisé en ce que chacun des rouleaux (18) est retenu contre une plaque (22) de matière élastique en une position de repos au fond de la surface (20) en rampe et ses extrémités axiales sont maintenues en contact avec la paroi du corps (10) du convertisseur.

3. Convertisseur d'énergie selon la revendication 2, caractérisé en ce que la surface en rampe (20) est formée par la surface de fond d'une rainure réalisée dans l'élément de piston (14) et les surfaces latérales de la rainure guident les surfaces axialement extrêmes des rouleaux (18) dans une direction transversale à l'axe du corps tubulaire (10) du convertisseur.

4. Convertisseur d'énergie selon l'une des revendications 1 à 3, caractérisé en ce que les rouleaux (18) comportent aux extrémités axiales une transition arrondie de leur enveloppe à leurs surfaces extrêmes et le rayon de la transition arrondie est compris entre environ 0,5 et 1 mm, de préférence entre 0,7 et 0,9 mm.

5. Convertisseur d'énergie selon l'une des revendications précédentes, caractérisé en ce que le corps tubulaire (10) du convertisseur est formé par le cylindre d'une commande linéaire pyrotechnique à piston et cylindre d'un tendeur de ceinture et le dispositif de déformation est disposé sur le piston de cette commande linéaire, le sens (F1) du mouvement du piston (14) étant opposé au sens déterminé (F2) lors de la mise en action de la commande linéaire.

6. Convertisseur d'énergie selon l'une des revendications précédentes, caractérisé en ce que l'épaisseur de la paroi du corps tubulaire (10) du convertisseur croît dans le sens déterminé (F2) dans une mesure qui est déterminée par une variation préalablement définie des forces (F) devant être transmises par l'organe de traction ou de poussée (12) en fonction du trajet (s) du mouvement des rouleaux (18) à l'intérieur du corps (10) du convertisseur.

7. Convertisseur d'énergie selon l'une des revendications précédentes, caractérisé en ce qu'il est dimensionné pour des forces (F) apparaissant lors du déplacement des rouleaux (18) dans le corps tubulaire (10) du convertisseur et qui sont comprises dans une plage d'environ 5000 N à environ 12 000 N, et est prévu en particulier pour être utilisé entre la boucle de la ceinture et son lieu de fixation sur le véhicule.
